# EUROPEAN PATENT APPLICATION

(11) **EP 4 478 231 A1**
(43) Date of publication of application: **18.12.2024**
(21) Application number: 23179547.7
(22) Date of filing: 15.06.2023
(51) Int. Cl.: G06F 21/62, G10L 15/26

(54) **AUTOMATICALLY IDENTIFYING AND MITIGATING DATA SECURITY BREACHES**

(71) Applicant: Microsoft Technology Licensing, LLC, Redmond, WA 98052-6399 (US)
(72) Inventor: PONNIVALAVAN, Arulanandan, 560103 Bengaluru (IN); GOYAL, Vishal, 560103 Bengaluru (IN)
(74) Representative: Page White Farrer

(57) **Abstract**

The present disclosure provides systems and methods for detecting confidential information in input data. A subject entity and a first feature associated with the subject entity are extracted from input data. An indication of the subject entity is submitted to a machine learning feature extractor trained on a public dataset and entity-feature associations expressed in the public dataset. a second feature of the subject entity extracted from the public dataset is received from the ML feature extractor and compared with the first feature. It is determined, based on the comparison, that the first feature is not associated with the subject entity in the public dataset and in response, a data security mitigation action is performed.

## Description

### Background

In an increasingly connected world, it is difficult for organizations to prevent data security breaches, such as the unauthorised disclosure of confidential information, and to mitigate data security breached in a timely fashion. Herein, confidential information is used to generally refer to information that is not in the public domain. The unauthorised disclosure may be deliberate, but can also be inadvertent, with individuals not realizing that particular material is confidential.

### Summary

Techniques are disclosed herein, which enable automated detection of a potential data security breach. In this context, a data security breach may be deemed to occur when a first feature associated with a particular entity is disclosed or is determined to be at risk of being disclosed, and it appears likely that the first feature is confidential, meaning it appears to not yet be known in the public domain. Whilst the 'public domain' is vast, recent advances in machine learning (ML) feature extractors, such as 'transformers' trained on vast public data sets (e.g., all data that is freely available on the public Internet, or a significant portion of it), mean that it is now feasible to run a query (or queries) to obtain features associated with an entity in even very large public data sets. Herein, this ability is leveraged in a data security context, to obtain a second (public) feature associated with a given entity, which can then be compared with the first feature that has been disclosed, or is at risk of being disclosed, to ascertain whether the first feature is publicly known or confidential. In the latter case, appropriate mitigation action can be taken. By way of example, the present techniques can be applied in the context of a real-time communication, to detect and (where necessary) mitigate data security breaches or potential data security breaches in real-time or near real-time. More generally, these techniques can be applied in various information-sharing contexts, with any size of public data set, including vast public data sets but also smaller public datasets (e.g., to provide more context-specific detection and mitigation).

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of the present disclosure and to show how embodiments may be put into effect, reference is made by way of example to the accompanying drawings in which:
Figure 1 is a schematic diagram of a first example computing system;
Figure 2 is a flow chart illustrating an exemplary workflow according to some examples;
Figure 3 is a schematic diagram illustrating Audio/Text Service and LLM functionalities;
Figure 4 shows a highly schematic illustration of a user interface that provides a mitigation action in the form of a visual intervention, responsive to an identified confidentiality breach;
Figure 5 shows a highly schematic illustration of a second user interface that shows implementation of a muting action responsive to an identified confidentiality breach;
Figure 6 shows a highly schematic illustration of an exemplary computing system that externally reports an identified confidentiality breach;
Figure 7 shows a highly schematic diagram of a second example computing system; and
Figure 8 shows a highly schematic diagram of a third exemplary computing system.

### Detailed Description

Existing techniques allow certain types of sensitive information to be identified in documents, such as personal data (e.g., names, addressess, date of birth etc.) or financial data (e.g., card numbers, bank details etc.). Confidential information may also be detected based on explicit indications that it is confidential (such as watermarks, document headers etc.). Typically, such techniques use a classification-based approach to classify certain sections of a document as 'sensitive'. However, these techniques rely on known patterns that have been learned in respect of specific sensitive information types (e.g., during training in a machine learning approach). As such, they are not suited to the more general task of determining whether or not a given feature exists in a public dataset or knowledge base, because such models typically lack the extent of knowledge required to make that determination. Another issue is that, in certain deployment architectures, a model used to detect sensitive items in e.g., a document may be hosted external from a private system (e.g., an organization's system). Therefore, providing the document to the external model for classification, in itself, poses a data security risk.

Embodiments of the present invention provide improved data security, particularly but not exclusively in the context of real time communication events (such as audio or video calls, or real-time text-based or image-based communication, such as instant messaging, chat functions at the like). In embodiments of the present disclosure, rather than inputting, say, a document, which classifies portion(s) of the data as potentially sensitive based on pattern recognition, a subject entity and a feature associated with the entity are caused to be recognised in input data, e.g. audio or text data. An ML feature extractor trained on a public dataset (e.g., a transformer trained on a very large public data set) is queried based on the subject entity, to obtain a set of one or more public features that are known to be associated with the subject entity in the public data set. Note, at this stage, it is not known whether the feature extracted from the input data is publicly known, and it is therefore treated as potentially confidential at this point. This potentially confidential feature does not need to be provided to the ML feature extractor, which is beneficial from a data security perspective, particularly if the ML feature extractor is deployed in a 'third-party' system external to a private system in which the data security processing is implemented (e.g., outside of an organization's system infrastructure). Moreover, recent advances in ML feature extraction mean it is possible to obtain features associated with a given entity in even a vast public dataset at speed. Such models have been optimized to answer queries such as 'what are the features of [Entity X]', and the model's response will take into account the potentially vast extent of knowledge inferred in training (captured in parameters, e.g., weights, of the model that are learned in training on the public dataset). Once trained, such models can be executed at speed. The knowledge captured in the parameters of the ML feature extractor includes entity-feature associations expressed in the public training set (in other words, during training, the model learns that certain features are associated with certain entities in the public training set). This approach is also more scalable than existing classification-based approaches, and more generally applicable, because it does not rely on learning and recognizing patterns indicative of confidential information.

One way in which confidential information may be disclosed by individuals is during real-time communications events, such as a voice or video call conducted over audio or video communication platforms. Examples of the present disclosure provide improved data security during a real time communication event by detecting confidential information in exchanged audio data and taking appropriate mitigation action. Audio data may be captured from both real-time and non-real-time contacts (such as voicemails, voice notes, voice or video messages etc.). The techniques can also be applied to text which is not derived from audio data, such as text exchanged though messaging, email, shared documents, publication on the Internet or in third-party systems. Another form of input data is image data containing potentially confidential information. For example, the techniques may be applied to text derived from image data using image recognition (e.g., optical character recognition) methods. Another form of input data includes video data comprising potentially confidential information. An audio channel of the video data may be captured for processing using audio analysis techniques.

The methods and systems discussed herein may identify an entity under discussion in input data such as audio data or text data (e.g., from a word processor product configured to provide text editing functionalities) and the like, and the features thereof present in the input data. Example entities include products, organizations or persons. Publicly available features of the entity are then obtained using an ML feature extractor in the form of a large language model (LLM) that responds to natural language prompts. If the features under discussion are not amongst the publicly available features, this may indicate that the audio data comprises confidential information. Example embodiments below consider text derived from audio data through automated transcription. However, the description applied equally to text that is not derived from audio data and/or other forms of input data.

These techniques may be incorporated into an audio or video communication platform, for example as a plug-in, service, or part of communication application's codebase, which may detect confidential information in substantially real-time manner, and take mitigating action such as providing auditory or visual alerts to a user, or muting a participant.

In overview, examples of the present disclosure detects confidential information in audio data, for example in audio or video communication platforms. The examples leverage the knowledge present in LLMs to infer which features of an entity (e.g. a product, service, organization or person) are public knowledge, and consequently, which features under discussion are not. These techniques are efficient in terms of computing and memory resources, meaning that they can be executed in real time to analyse live audio. Furthermore, they do not require large manual rule sets, which are time consuming to create and maintain, and may easily become obsolete over time.

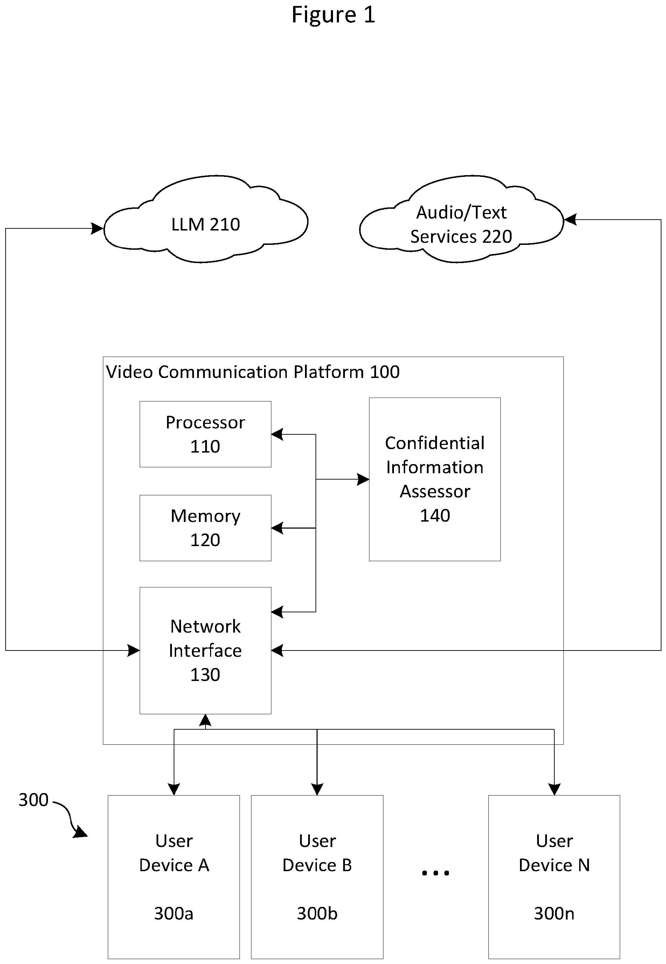

Figure 1 illustrates an example computing system 100. The computing system 100 takes the form of a realtime communication platform.

The realtime communication platform may be a audio or videotelephony platform e.g., a platform that facilitates multi-way audio and/or video communication between remote devices. Examples of such platforms include Microsoft^{®} Teams^{®}, Zoom^{®}, Google^{®} Meet^{®}, Slack^{®} and the like. Such platforms may additionally or alternatively facilitate the real-time exchange of text, images etc.

The system 100 may take the form of a server computer. The server computer may for example be an on-premise server. That is to say that the server computer is hosted on the premises of a particular organization to which it belongs. It may alternatively be hosted in a private cloud or other suitable arrangement. Of course, the system 100 may comprise a plurality of server computers.

The system 100 comprises a processor 110 and memory 120. The processor 110 is configured to execute instructions stored in the memory 120 to carry out any of the techniques discussed herein. The memory 120 may also store any data, either transiently or permanently, required to operate the system.

The system 100 is configured to communicate with a plurality of user devices 300, so as to facilitate video or audio communication therebetween. To that end, the system comprises a suitable network interface 130, via which the system 100 may communicate with external devices over a network connection. The network connection may include local and/or wide area network links, including the Internet.

The system 100 is also configured to communicate with an LLM 210 and/or audio and text services 220 via the network interface 130. The LLM 210 and services 220 may be hosted externally (i.e. "off-premise"). The LLM 210 and services 220 are discussed in more detail below.

More generally, it will be appreciated that the subject entity and a first feature associated with the subject entity may be extracted from the audio data at a first computer device and transmitted to an ML feature extraction model hosted at a second computer device. Such transmission may comprise transmission across a network such as the internet, via network interface components as described herein.

The system 100 further comprises a confidential information assessor 140, the operation of which is also discussed in more detail below. In one example, the confidential information assessor 140 may take the form of a plugin or "app" - i.e. a modular piece of software installed to augment the existing functionality of the platform. However, the confidential information assessor 140 may also be integral to the video communication platform. In some examples, each user device 300 may comprise a confidential information assessor. Embodiments where a distinct confidential information assessor is located in each user device 300 provides improved security, as data may not have to be processed external to the user device.

The user devices 300 each comprise any suitable device for participating in video and/or audio communication. The devices 300 may each comprise audio input and output hardware (microphones, speakers, headphones etc), and optionally video input and display hardware (cameras, screens etc). Example devices 300 include personal, laptop or tablet computers, mobile telephones, wearable devices and the like.

The system 100 is configured to facilitate audio and video communication between devices 300. For example, the system 100 may host scheduled or adhoc virtual meetings to which user devices 300 may connect.

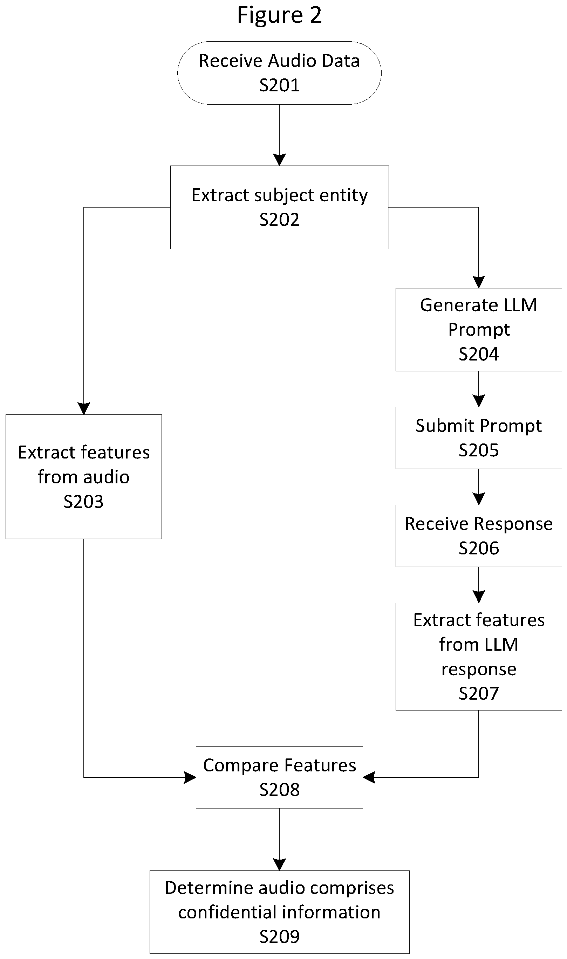

Turning now to Figure 2, the functionality of the confidential information assessor 140 will now be discussed. It will be noted that some or all of the functionalities of the confidential information (CI) assessor 140 may be implemented by leveraging cloud- or server-based tools. For example, the CI assessor 140 may control operation of the audio/text services 220 via the network interface 130.

With reference to the flow chart of Figure 2, audio data is received at step S201, for example from a user device 300. The audio data may form part of a stream of video data. That is to say, the audio may be encoded with video data as part of a video stream received from the user device 300. In such cases, the audio data is separated from the video data, and the remainder of the process operates on the audio data, or other data derived therefrom.

The system may divide the audio data into segments, wherein each segment is assessed for confidential information. For example, the audio data may be segmented on a pause in speech, on a switch of speaker, or after a predetermined time has elapsed.

Known services may be employed to conduct the above-described audio segmentation. For example, Azure Cognitive Services comprise libraries of tools configurable to segment audio data as described above.

Depending on circumstance, it may be desirable to limit or otherwise control the length of segments. Longer segments may result in fewer segments to assess, and less network bandwidth used in calls to the LLM 210 and services 220, but at the expense of immediate intervention.

At a next step S202, Natural Language Processing (NLP) is performed on each audio segment of the audio data to extract a respective subject entity for each segment. The subject entity may be understood to be an object of discussion within the audio segment, e.g., a thing which is spoken about in the audio segment. In some examples, such as in a videoconferencing context, a subject entity may be derived from a title or description of the video conference.

Extraction of the subject entity from an audio segment at step S202 may be performed by encoding audio data of the segment as text and performing semantic analysis on the text to identify the object of discussion in the segment, and thereby determine the subject entity.

In examples of the present disclosure, an admin of an organization may configure and maintain an extensible, global list of keywords to track for entity detection. Examples may include: 'quarterly results', or other such phrases whose context of discussion is likely to be confidential.

Speech-to-text transcription techniques may be implemented by leveraging NLP tools of the audio/text services 220. By way of example only, the Speech SDK library within Azure Cognitive Services supports speech to text recognition requests, including real-time speech-to-text, wherein the audio is transcribed as speech as recognized from a microphone input or streamed audio file. However, batch transcription may also be implemented in offline solutions, examples of which are described later herein.

On extraction of the subject entity of a segment, the confidentiality assessor may conduct two parallel analyses, based on the extracted subject entity, to identify two corresponding sets of subject entity features. Each subject entity feature may be understood to be a distinct piece of information that is issued in respect of, or otherwise directed to, the subject entity.

In a first of the parallel analyses, represented by step S203, a set of subject entity features, comprising one or more feature associated with the subject entity, may be determined based on the audio data, e.g., based on a natural language transcription of the audio data. This audio-based feature set may be determined by semantic analysis of the audio segment, e.g., by application of one or more audio/text service 220, to identify one or more point of discussion with respect to the subject entity. That is, in the case of the audio-based feature set, the set may comprise one or more piece of information, derived from audio data for the segment, which spoken in respect of (or otherwise directed to) the subject entity.

In some examples, semantic analysis for determining the audio-based feature set may comprise an assessment of the transcribed audio data against a pre-defined list of key words and phrases. The pre-defined list may be configurable by an admin of the video communication platform, or by a user with admin privileges within a particular network of users (e.g., within a particular team in a company). The pre-defined list may also be extensible and may be updated.

Furthermore, in some examples, detection of a subject entity and one or more features associated therewith in the audio data may be performed by matching a portion of the text transcript that includes the subject entity and the one or more feature with a predefined text template. By way of example, the template may encode a textual phrase structure such as, 'we are adding a new feature of X to Y', where Y represents a subject entity, and X represents information directed thereto. Therefore, steps S202 and S203 may in part be carried out by identifying portions of text that match such a phrase template, e.g., when X and Y are substituted for one or more word in the transcript that represents a feature and subject entity of the text.

It will be appreciated that other templates than the above example are configurable.

Further, and more generally, the subject entity and the first feature (e.g., in the form of a set of audio-based features) may be identified based on at least one of: ML intent recognition applied to the text transcript, ML named entity recognition applied to the text transcript, ML entity extraction applied to the text transcript, and matching the subject entity with a predefined entity keyword

NLP tools of the audio/text services 220 may also be leveraged to extract the set of audio features at step S203.

In a second parallel analysis process, comprising steps S204-S207, an LLM feature set is determined. At a step S204, an LLM prompt is generated, the LLM prompt comprising an indication of the extracted subject entity, e.g., a natural language prompt indicating the identified subject entity.

At a step S205, the LLM prompt may be submitted, e.g., via the network interface 130, to the LLM service 210. In some examples, a plurality of prompts may be submitted. That is, different responses may be generated by the ML feature extractor depending on the prompt. One or more variant of a prompt relating to the subject entity may be submitted, such that multiple different responses may be taken into account when later generating a second feature (e.g., in the form of a known set of features).

A response to the LLM prompt may be generated at the LLM service 210 and transmitted back to the system 100 via the network interface 130, to be received by the confidentiality assessor at a step S206. The LLM response may be a plain text response generated by application of a machine learning model based on a very large set of public training data. As discussed in more detail later, the LLM referred to herein may comprise ChatGPT, which is a transformer, trained on a training data set comprising of the order of 300 billion words and representing a substantial portion of all content that is available to the public on the internet.

Upon receipt of the LLM response at step S206, a semantic analysis (e.g., based on an NLP service) may be performed on the received response (or responses in examples where a plurality of prompts are submitted and a respective plurality of responses are received). The semantic analysis is performed to extract, at a step S207, entity-feature associations expressed in the public training set, which may take the form of a set of LLM response features. Description herein relating to LLM response features may be understood to generalize to other types of entity-feature associations expressed in the public training set. The set of LLM response features may comprise one or more point of discussion with respect to the subject entity, as provided in the LLM response received at step S206.

That is, in the case of the LLM feature set, the set may comprise one or more piece of information about the subject entity, which is comprised within the LLM response. Since an LLM model is trained on data that can be taken as being 'known information' - i.e., the training data does not comprise confidential information about the subject entity - the set of LLM features may be considered to comprise a set of known features about the subject entity.

At a step S208, the audio-based feature set may be compared to the set of LLM features. Such a comparison may be performed by configuring an NLP service to match features in the audio feature set with features in the LLM feature set. The NLP tool configured to match the features may be comprised in the audio/text services 220.

By taking the set of LLM features to represent a set of known features of the subject entity and the set of audio-based features as a set of disclosed features of the subject entity, and by identifying one or more feature comprised in the audio based set that is not comprised in the set of LLM features, the comparison of step S208 may result in an advantageous determination, at a step S209, that the audio data comprises confidential information about the subject entity, which has not been previously disclosed.

Step S209 may further comprise a thresholding process, wherein a determination that the audio data **does** comprise confidential information is made in response to determining that a fraction of features known in the audio-based set, but not known in the set of LLM features, exceeds a minimum threshold.

In some examples, the relevant threshold may be 20%. That is, if a known set of features comprises less than 20% of the features found in the disclosed set of features, step S209 may return an indication that a breach of confidentiality has likely occurred.

More generally, a higher percentage of overlapping features may indicate a higher confidence that the audio data does not comprise a confidential disclosure. By contrast, a lower percentage of overlapping features may indicate a higher level of confidence that the audio data **does** comprise a confidential disclosure.

Those skilled in the art will appreciate that selection of a precise fraction to act as a threshold is a design choice. However, the inventors have noted that it is beneficial to configure the system to tend towards making false-positive identifications of breached confidentiality. That is, incorrectly flagging an instance of breached confidentiality brings less severe ramifications than failing to identify genuine breaches. Accordingly, the feature comparison module 229 and the above threshold may be configured such that error in the system is biased towards making false-positive identifications.

The inventors have further noted that processing resources may be spared by defining a set of words, phrases, and/or entities that are excluded from consideration in the workflow. By way of example, ubiquitous phrases and commonplace terms may be disregarded as entities - or features of an entity - for assessing confidentiality. That is, the delay may enable muting to be applied only to a spoken phrase that is identified as comprising confidential information, rather than permanently muting the speaker.

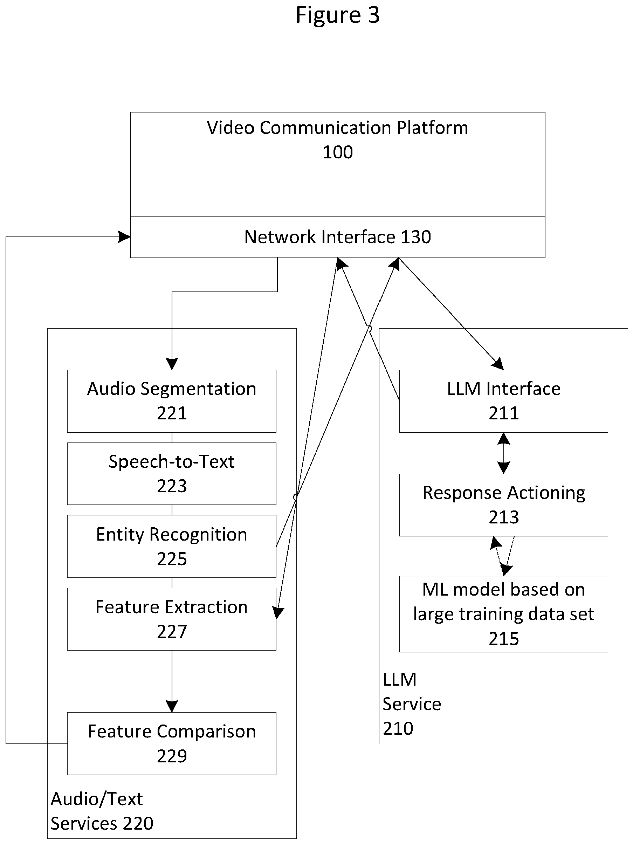

Reference is now made to Figure 3, which shows a highly schematic diagram illustrating tools and functionality pipelines of the audio/text services and the LLM service according to some examples of the present disclosure.

Figure 3 shows a video communication platform 100 comprising a network interface 130. Figure 3 represents the video communication platform 100 at a very high level, and modules which may be comprised therein are omitted for clarity in Figure 3.

As represented by arrows between the respective blocks in the diagram, the network interface is configured to be in communication with audio/text services 220, which may be provided by a server that is remote from the video communication platform. The audio/text services 220 may therefore be cloud-based.

The audio/text services 220 comprise a plurality of modules configured to process audio data, e.g., extracted during a real-time communication event, such as from an audio channel of a video/audio stream in a videoconferencing call, and to provide NLP functionalities for interpreting speech in the audio data.

The audio/text services 220 of Figure 3 comprise an audio segmentation module 221, which may be configured to receive input of audio data comprising speech and to segment the audio data based on speech features within the audio data, such as pauses or changes of speaker. The audio data may comprise real-time audio data extracted from an audio channel streamed from a videoconferencing application, and may be transmitted to a server hosting the audio/text services in real-time via the network interface.

Advantageously, in real-time examples, a small amount, e.g., a few seconds, of lag or delay in transmission and receipt of audio data may be introduced to the real-time communication event. Such a delay is advantageous because it provides increased security by allowing processing of the audio data to implement a mitigation action before transmission of the audio data is actioned in the real-time communication event; i.e., the mitigation action may be preventative of real-time confidentiality breach.

The audio/text services of Figure 3 further comprise a speech-to-text module 223, which may be implemented by a machine learning model configured to process sound waves comprised in the audio data and to identify and automatically transcribe speech therein, generating a plain text representation of what was spoken in the audio data. The speech-to-text module may be further configured to identify a spoken language, and to provide a transcription in said spoken language.

An entity recognition module 225 of the audio/text services may be configured to identify an object of discussion in the speech of the audio data. The entity recognition module 225 may operate on a plain text input, e.g., a plain text transcription of an audio segment provided by the speech-to-text module 223. The entity recognition module 225 may use NLP techniques to interpret one or more entity to which the focus of the spoken segment is directed.

The entity recognition module 225 may produce an output that is communicated, e.g., via a network such as the internet, to the network interface 130 of the video communication platform 100 for the purpose of LLM prompt construction. That is, as described previously, the video communication platform is configured to generate an LLM prompt to be provided to the LLM service 210. Transmission of the generated prompt to the LLM service 210 is described in more detail below.

A feature extraction module 227 of the audio/text services is also shown. Like the entity recognition module 225, the feature extraction module 227 may leverage NLP tools to perform its functionality. The feature extraction module 227 may be configured to receive input of a plain text segment and an indication of an entity, and may be configured to identify points of discussion expressed in the plain text segment in respect of the indicated entity.

The feature extraction module 227 may be configured to receive input from previous modules in a pipeline of the audio/text services 220, e.g., comprising the audio segmentation 221, speech-to-text 223, and entity recognition 225 modules. In such cases, the feature extraction module 227 may be configured to extract a set of audio-based features of the subject entity.

Reference herein to a 'set of disclosed entity features', or a 'disclosed feature set' may be understood as referring to a set of features of the subject entity derived by analysis of the received audio data, where said analysis may be conducted by modules 221, 223, 225, and 227, as described above.

The feature extraction module 227 may be additionally configured to receive input of a plain text segment from the network interface 130 of the video communication platform. As described in more detail below, a set of LLM features may be extracted by the feature extraction module 227 by applying the module 227 to a plain text output of the LLM service 210. That plain text output may be communicated from the LLM service 210 to the network interface of the video communication platform and then transmitted to the feature extraction module 227 for the purpose of generating an LLM feature set.

The second feature associated with the subject entity, as described herein, may take the form of a 'set of known entity features', or a 'known feature set'. For example, descriptions of such a set of known entity features may generalize to refer to the second feature associated with the subject entity, derived by analysis of a plain text output of the LLM service 210.

Figure 3 further shows a feature comparison module 229 of the audio/text services 220, which may be configured to conduct an NLP-based analysis of the disclosed feature set and the known feature set to generate a confidence score indicating a likelihood that a disclosure of confidential information pertaining to the subject entity has been made in the speech represented by the input audio data.

The LLM service 210 is shown in Figure 3 to comprise an LLM interface 211, which may be a network interface of the LLM service, configured to send and receive data between the network interface 130 of the video communication platform 100 and the LLM service 210.

The LLM interface may be configured to receive an LLM prompt from the video conferencing platform, the prompt indicative of a subject entity identified by the audio/text services.

A response to the received prompt may be actioned by a response actioning module 213. The response actioning module 213 may be configured to compile computer code of the LLM service, causing a large machine learning model 215, trained on a large training data set, to be applied to the received prompt to generate a plain text output. The plain text output may be indicative of publicly known properties, characteristics or other features of the subject entity indicated in the prompt.

The plain text output of the LLM service may be transmitted by the LLM interface to the network interface 130 of the video communication platform 100, which may in turn forward the LLM output to the audio/text services 220 for extraction of a known feature set, and subsequent feature comparison.

Various modifications and alterations may be made to the examples discussed herein within the scope of this disclosure.

For example, the system may not apply the workflow to real-time audio streamed from a video communication platform. Instead, examples of the present disclosure relate to offline processing of stored audio or video data. Whilst the input audio data may not be streamed in such examples, it will be appreciated that the workflow may still leverage cloud-based or server-hosted machine learning services (e.g., audio/text services 220) to identify potential confidentiality breaches.

Nevertheless, in some examples, one or more audio/text service referred to herein may be locally implemented. That is, NLP modules may be stored locally in a storage device of the computer device, accessible to the processor for conducting audio and text analysis on-premise, without need for intervention or communication with a remote server hosting the services.

Alternatively, or additionally, the LLM may be stored locally (i.e., on premise in the system 100) rather than separately hosted by a remote server. Examples of implementing a locally hosted LLM functionality may comprise use as a data security solution in one-way streaming applications.

In some examples, the system may implement the workflow entirely locally, with audio/text processing functionalities being stored in a local storage device accessible to the processor, to conduct assessments of confidentiality without intervention of cloud or server hosted services.

Furthermore, in some examples, aspects of the present disclosure may not be provided as part of service, but instead installed for assessing peer-to-peer audio communications.

In some examples, methods of determining that the received audio data comprises confidential information may further comprise a determination of a risk category associated with a user device or participant entity that is participating in the real-time communication event (e.g., videoconference call). In such examples, the subject entity, extraction of a set of disclosed features, and extraction of a set of known features may be performed responsive to determining the risk category. Examples of such a risk category may include that the user device or participant entity is associated with an external participant, who may not be party to confidential information.

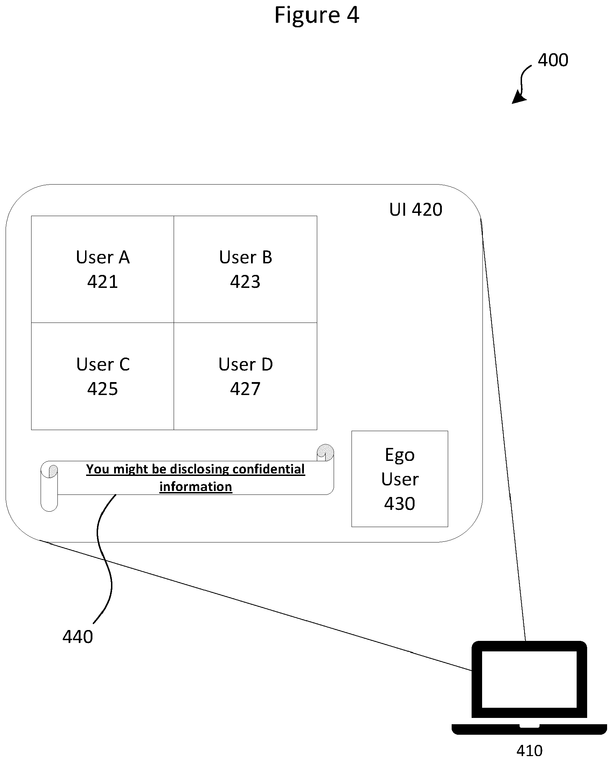

Advantageously, the video communication platform 100 may be configured to implement one or more mitigation action, according to one or more respective intervention mechanism, responsive to a determination by the confidential information assessor 140 that a breach of confidentiality has occurred. Exemplary mitigation actions and corresponding intervention mechanisms of the present disclosure are now described with reference to Figures 4-6. In all exemplary intervention mechanisms, the intervention forms part of a technical control loop for flagging, preventing, and/or acting to remedy spoken disclosure of confidential subject matter.

Figure 4 shows a highly schematic diagram of a computing environment 400 comprising a user computing device 410, configured to run a video communication platform 100 according to examples of the disclosure herein. The user device 410 is shown to comprise a user interface (UI) 420 configured to provide a videoconferencing functionality to a user of the computing device 410.

The user interface 420 comprises a plurality of remote user video stream windows 421, 423, 425, and 427, which are respectively associated with remote users A, B, C and D. Devices operated by users A-D for providing corresponding instances of the videoconferencing application are not illustrated in Figure 4. However, users A-D may be using a video communication platform with or without a plugin or integrated software unit configured to implement the presently-described confidentiality breach assessment.

The UI 420 of Figure 4 further comprises an ego user video preview window 430. The ego user may be understood as a user of the computing device 410. The ego preview window 430 may provide a real-time view of the user, or any subject positioned in front of a webcam or other camera device associated with the ego device, as that subject would be seen by users A-D during the call. Alternatively, the ego preview window 430 may provide an indication that there is no active video feed being transmitted from the user device 410; e.g., an associated camera is not active, or no such camera is linked to the device 410.

Figure 4 represents an exemplary scenario in which the ego user of the device 410 has spoken about a particular subject, and has disclosed one or more confidential feature of that subject in the videoconference call.

Responsive to determining that a confidential disclosure is made in the videoconference call, the platform 100 is configured to surface a visual indication 440 that such a breach has been detected by the system. In the example of Figure 4, the visual indication comprises a pop-up notification that alerts the user to their potential confidentiality breach.

The visual indicator 440 may prompt the user to - for example - take care not to disclose further confidential information, or to request that NDA (Non-Disclosure Agreement) contracts be signed by those party to the confidential disclosure.

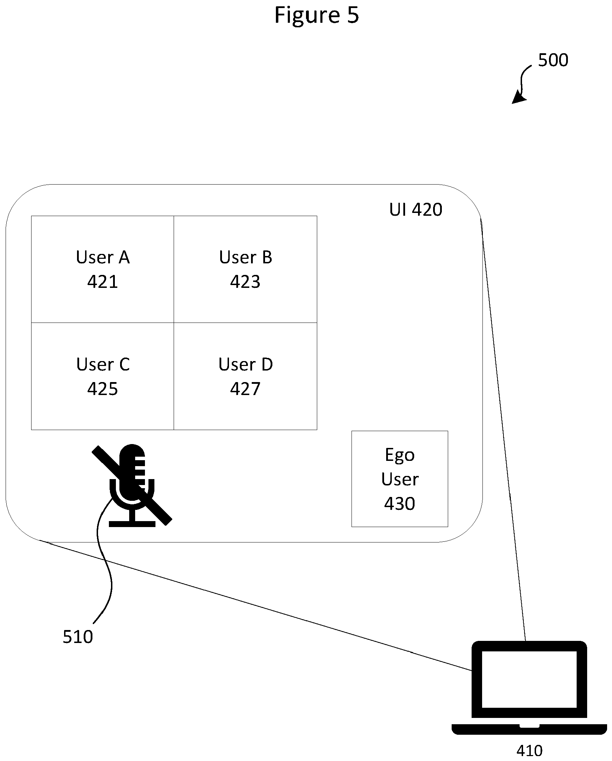

Figure 5 shows a highly schematic diagram of a second exemplary computing environment 500, comprising the user computing device 410. Again, the user computing device 410 is configured to run a video communication platform 100 according to examples of the disclosure herein. The user device 410 is further shown to comprise the UI 420, which provide a videoconferencing functionality to the user of computing device 410.

In the example of Figure 5, a second exemplary intervention mechanism is provided responsive to the system determining that a confidential disclosure has been made. The UI 420 of Figure 5 comprises a mute control 510, which may be a user-selectable element surfaced on the UI 420 and selectable to mute the user of device 410, such that no audio data is captured by 410 or transmitted to other users in the call - i.e., users A-D. The second intervention mechanism comprises automatic enabling of the mute control 510 in response to detection of a confidentiality breach. As seen in Figure 5, the mute control 510 is represented by a struck-out microphone icon, indicating to the user that no microphone input is transmitted to other users in the call.

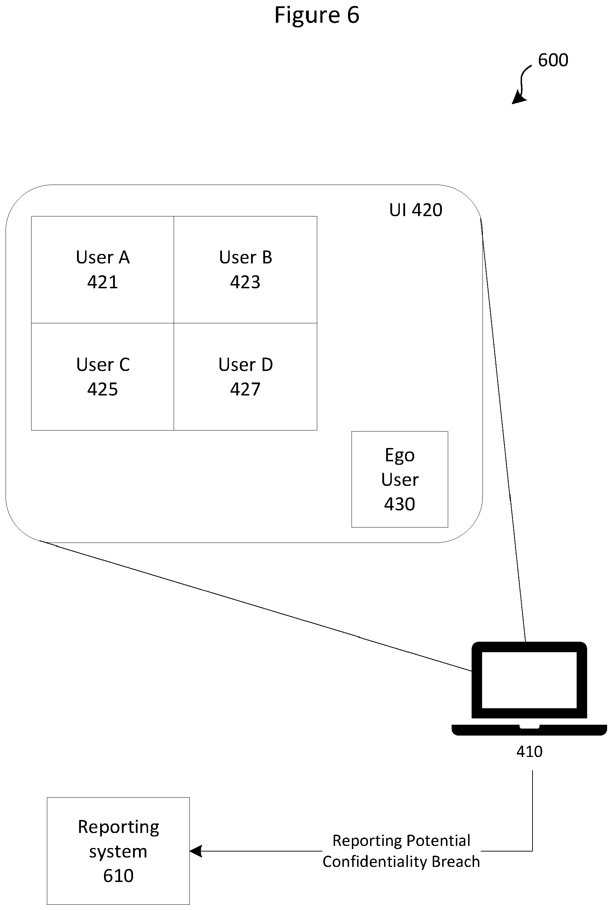

Figure 6 shows a highly schematic diagram of a third exemplary computing environment 600, again comprising the user computing device 410 and the UI 420, providing a videoconferencing functionality to the user of computing device 410.

In the example of Figure 6, the user device 410 is configured to transmit a confidentiality breach report to a reporting system 610. The reporting system 610 may comprise a remote computing device having a storage means therein for storing and/or organising data pertaining to potential confidentiality breaches. The confidentiality breach report may comprise an indication of disclosed features which were not identified in the known set of features (derived from the LLM output), enabling a reviewing user of the reporting system to assess a severity of the breach and act to mitigate damage caused by the breach, or to remedy the situation.

Though not represented in the drawings, further mitigation actions may include: terminating the real-time communication event, removing a user device or participant entity from the real-time communication event, causing a notification to be outputted at a user device participating in the real-time communication event, storing an indication of the audio data in a data security incident log, causing deletion of a copy of the audio data held in computer storage, recalling a message comprising a copy of the audio data, the message having been exchanged between a first computer and a second computer device, and providing an alert sound at the user device.

It will be appreciated that one or more of the above intervention mechanisms described above may be simultaneously implemented. For example, one or more action of: surfacing a visual cue, actioning a mute control, and submitting a breach incident report may be taken by the system in response to detection of a confidentiality breach etc., may be actioned simultaneously in response to the same detection of a potential confidentiality breach.

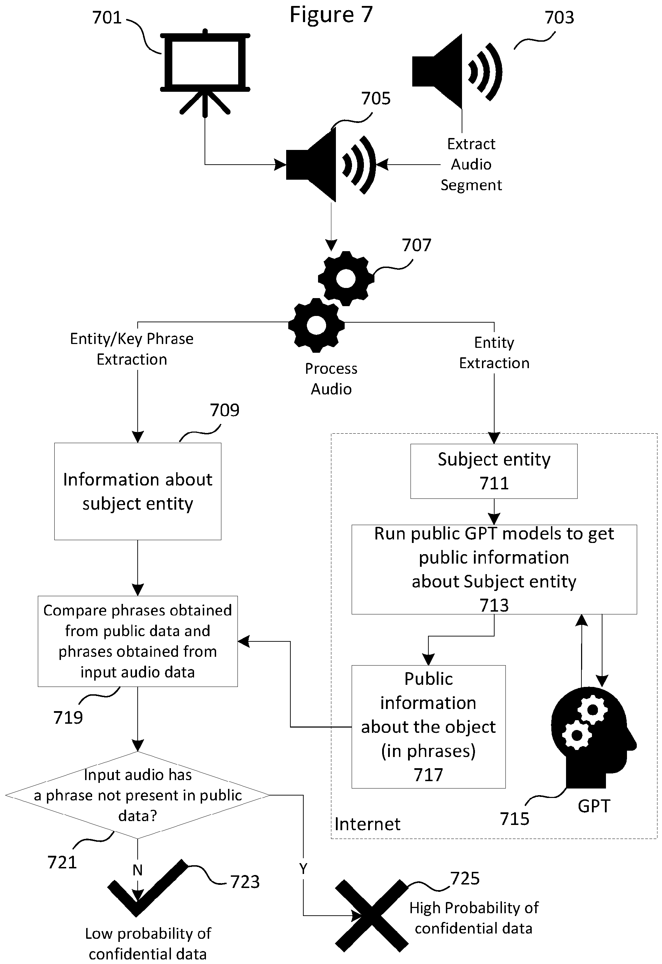

Reference is now made to Figure 7, which shows an exemplary computing process in which methods according to some examples of the present disclosure are enacted.

Figure 7 represents two exemplary input streams from which audio input is received. Figure 7 shows a video conferencing event 701, from which an audio channel is extracted, and an audio-only communication event 703. Both events 701 and 703 may be real-time communication events.

Reference number 705 denotes an audio processing step, which may comprise a speech-to-text processing procedure implemented, by way of example, at a machine learning module.

The audio processing 707 of Figure 7 is configured to cause a subject entity and a first feature associated with the subject entity to be extracted from the audio data. A block denoted 709 represents information about the subject entity, which may take the form of the first feature associated with the subject entity.

A block denoted 711 represents an indication of the subject entity, which may comprise one or more prompt configured for submission to a machine learning feature extractor, e.g., an LLM as described above.

A block denoted 713 represents extraction, by the ML feature extractor, of entity-feature associations expressed in a public training set on which the ML feature extractor is trained. A large language model (LLM) 715 is shown in Figure 7 to provide the feature extraction functionality.

Block 717 of Figure 7 denotes a second feature of the subject entity extracted from the public dataset. It will be noted that blocks 711-717 of Figure 7 are shown to be actioned by services accessed via the internet; i.e., by cloud-based or server-hosted services.

Block 719 of Figure 7 denotes a comparison between the first feature and the second feature. A determination is made, at a block denoted 721, as to whether, based on the comparison of block 719, the first feature is associated with the subject entity in the public dataset. Determination that the first feature is associated with the subject entity in the public dataset may infer that there is a low probability of confidentiality breach, as denoted by block 723 in Figure 7. By contrast, determination that the first feature is **not** associated with the subject entity in the public dataset may infer that there is a high probability of confidentiality breach, as denoted by block 725 in Figure 7.

Responsive to reaching block 725, a data security mitigation action, such as those described previously herein, may be performed.

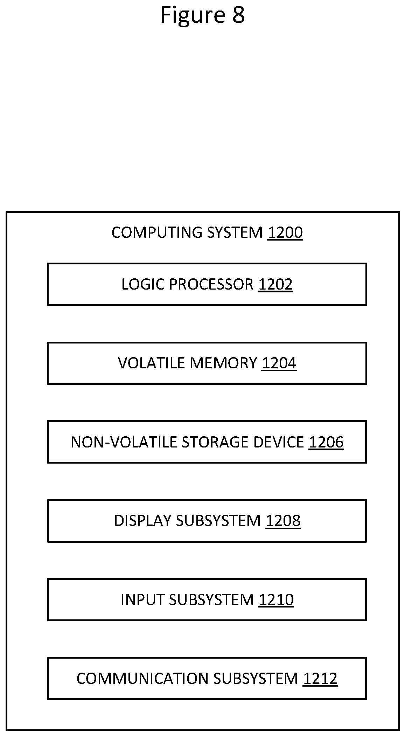

Figure 8 schematically shows a non-limiting example of a computing system 1200 that can enact one or more of the methods and processes described above. Computing system 1200 is shown in simplified form. Computing system 1200 may embody any of the computing systems described above. Computing system 1200 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 1200 includes a logic processor 1202, volatile memory 1204, and a non-volatile storage device 1206. Computing system 1200 may optionally include a display subsystem 1208, input subsystem 1210, communication subsystem 1212, and/or other components not shown in FIG. 8.

Logic processor 1202 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 1202 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 1206 includes one or more physical devices configured to hold instructions executable by the logic processors to implement the methods and processes described herein. When such methods and processes are implemented, the state of non-volatile storage device 1206 may be transformed - e.g., to hold different data.

Non-volatile storage device 1206 may include physical devices that are removable and/or built-in. Non-volatile storage device 1206 may include optical memory (e g., CD, DVD, HD-DVD, Blu-Ray Disc, etc ), semiconductor memory (e g., ROM, EPROM, EEPROM, FLASH memory, etc.), and/or magnetic memory (e.g., hard-disk drive, floppy-disk drive, tape drive, MRAM, etc.), or other mass storage device technology. Non volatile storage device 1206 may include nonvolatile, dynamic, static, read/write, read-only, sequential-access, location-addressable, file-addressable, and/or content-addressable devices. It will be appreciated that non-volatile storage device 1206 is configured to hold instructions even when power is cut to the non-volatile storage device 1206.

Volatile memory 1204 may include physical devices that include random access memory. Volatile memory 1204 is typically utilized by logic processor 1202 to temporarily store information during processing of software instructions. It will be appreciated that volatile memory 1204 typically does not continue to store instructions when power is cut to the volatile memory 1204.

Aspects of logic processor 1202, volatile memory 1204, and non-volatile storage device 1206 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1200 typically implemented in software by a processor to perform a particular function using portions of volatile memory, which function involves transformative processing that specially configures the processor to perform the function. Thus, a module, program, or engine may be instantiated via logic processor 1202 executing instructions held by non-volatile storage device 1206, using portions of volatile memory 1204. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 1208 may be used to present a visual representation of data held by non-volatile storage device 1206. The visual representation may take the form of a graphical user interface (GUI). As the herein described methods and processes change the data held by the non-volatile storage device, and thus transform the state of the non-volatile storage device, the state of display subsystem 1208 may likewise be transformed to visually represent changes in the underlying data. Display subsystem 1208 may include one or more display devices utilizing virtually any type of technology. Such display devices may be combined with logic processor 1202, volatile memory 1204, and/or non-volatile storage device 1206 in a shared enclosure, or such display devices may be peripheral display devices.

When included, input subsystem 1210 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 1212 may be configured to communicatively couple various computing devices described herein with each other, and with other devices. Communication subsystem 1212 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 1200 to send and/or receive messages to and/or from other devices via a network such as the internet.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

Set out below are further aspects of the disclosure and optional features thereof.

In a first aspect, there is provided a computer-implemented method, comprising: receiving a subject entity and a first feature associated with the subject entity, recognized in input data; inputting an indication of the subject entity to a machine learning (ML) feature extractor, the ML feature extractor having learned via training on a public dataset entity-feature associations expressed in the public dataset; receiving from the ML feature extractor, in response to the indication of the subject entity, a second feature of the subject entity extracted from the public dataset; comparing the first feature with the second feature; determining, based on comparing first feature with the second feature, that the first feature is not associated with the subject entity in the public dataset; and responsive to determining that the first feature is not associated with the subject entity in the public dataset, causing a data security mitigation action to be performed.

In some embodiments of the method, the input data is associated with a real-time communication event, and is received during the real-time communication event; wherein the data security mitigation action comprises at least one of: muting an audio channel of the real-time communication event, terminating the real-time communication event, removing a user device or participant identity from the real time communication event, causing a notification to be outputted at a user device participating in the real time communication event, and recalling or deleting a message associated with the input data, the message exchanged in the real-time communication event.

In some embodiments, the method comprises determining a risk category associated with a user device or participant entity participating in the real-time communication event, wherein the subject entity, the first feature and the second feature are obtained responsive to determining the risk category.

In some embodiments of the method, the input data comprises at least one of: audio data, text data, video data, and image data.

In some embodiments of the method, the data security mitigation action comprises at least one of: storing an indication of the input data in a data security incident log, causing deletion of a copy of the input data held in computer storage, and recalling a message comprising a copy of the input data, the message having been exchanged between a first computer device and a second computer device.

In some embodiments of the method, the ML feature extractor is a large language model (LLM), and a natural language prompt including the subject entity is inputted to the LLM.

In some embodiments of the method, a plurality of natural language prompts are inputted to the LLM based on the subject entity, resulting in a plurality of second responses, wherein the second feature is extracted from the plurality of responses, wherein the second feature is optionally extracted from the plurality of responses using key phrase extraction applied to the plurality of responses.

In some embodiments of the method, a plurality of second features is received from the ML feature extractor in response to the subject entity, and the first feature is compared with each second feature.

In some embodiments of the method, the ML feature extractor is a transformer or other form of neural network.

In some embodiments of the method, the input data comprises audio data, wherein recognizing the subject entity and the first feature from the input data comprises automatically generating a text transcript of the audio data, and identifying the subject entity and the first feature in the text transcript.

In some embodiments of the method, the subject entity and the first feature are identified based on at least one of: ML intent recognition applied to the text transcript, ML named entity recognition applied to the text transcript, ML entity extraction applied to the text transcript, matching the subject entity with a predefined entity keyword, and matching a portion of the text transcript that includes the subject entity and the first feature with a predefined text template.

In some embodiments of the method, the input data comprises audio data, the method comprising recognizing, in the audio data at a first computer device, the subject entity and the first feature, and transmitting the subject entity to the ML feature extraction model, the ML feature extraction model hosted on a second computer device.

In some embodiments of the method, a plurality of first features is recognized in the input data and, a plurality of second features of the subject entity extracted from the public dataset is received from the ML feature extractor.

According to a second aspect of the invention, there is provided a computer system comprising at least one memory configured to store computer-readable instructions; and at least one processor coupled to the at least one memory, the computer-readable instruction configured, upon execution on the at least one processor, to implement a method according to any of the above embodiments.

According to a third aspect of the invention, there is provided a computer-readable storage medium configured to store computer-readable instructions that are configured, upon execution on the at least one processor, to implement a method according to any of the above embodiments.

## Claims

1. A computer-implemented method, comprising:
receiving a subject entity and a first feature associated with the subject entity, recognized in input data;
inputting an indication of the subject entity to a machine learning (ML) feature extractor, the ML feature extractor having learned via training on a public dataset entity-feature associations expressed in the public dataset;
receiving from the ML feature extractor, in response to the indication of the subject entity, a second feature of the subject entity extracted from the public dataset;
comparing the first feature with the second feature;
determining, based on comparing first feature with the second feature, that the first feature is not associated with the subject entity in the public dataset; and
responsive to determining that the first feature is not associated with the subject entity in the public dataset, causing a data security mitigation action to be performed.

2. The method of claim 1, comprising:
wherein the input data is associated with a real-time communication event, and is received during the real-time communication event;
wherein the data security mitigation action comprises at least one of:
muting an audio channel of the real-time communication event,
terminating the real-time communication event,
removing a user device or participant identity from the real time communication event,
causing a notification to be outputted at a user device participating in the real time communication event, and
recalling or deleting a message associated with the input data, the message exchanged in the real-time communication event.

3. The method of claim 2, comprising:
determining a risk category associated with a user device or participant entity participating in the real-time communication event, wherein the subject entity, the first feature and the second feature are obtained responsive to determining the risk category.

4. The method of any preceding claim, wherein the input data comprises at least one of: audio data, text data, video data, and image data.

5. The method of any preceding claim, wherein the data security mitigation action comprises at least one of:
storing an indication of the input data in a data security incident log,
causing deletion of a copy of the input data held in computer storage, and
recalling a message comprising a copy of the input data, the message having been exchanged between a first computer device and a second computer device.

6. The method of any preceding claim, wherein the MLfeature extractor is a large language model (LLM), and a natural language prompt including the subject entity is inputted to the LLM.

7. The method of claim 5, wherein a plurality of natural language prompts are inputted to the LLM based on the subject entity, resulting in a plurality of second responses, wherein the second feature is extracted from the plurality of responses, wherein the second feature is optionally extracted from the plurality of responses using key phrase extraction applied to the plurality of responses.

8. The method of any preceding claim, wherein a plurality of second features is received from the ML feature extractor in response to the subject entity, and the first feature is compared with each second feature.

9. The method of any preceding claim, wherein the ML feature extractor is a transformer or other form of neural network.

10. The method of any preceding claim, wherein the input data comprises audio data, wherein recognizing the subject entity and the first feature from the input data comprises automatically generating a text transcript of the audio data, and identifying the subject entity and the first feature in the text transcript.

11. The method of claim 10, wherein the subject entity and the first feature are identified based on at least one of:
ML intent recognition applied to the text transcript,
ML named entity recognition applied to the text transcript,
ML entity extraction applied to the text transcript,
matching the subject entity with a predefined entity keyword, and
matching a portion of the text transcript that includes the subject entity and the first feature with a predefined text template.

12. The method of any preceding claim, wherein the input data comprises audio data, the method comprising recognizing, in the audio data at a first computer device, the subject entity and the first feature, and transmitting the subject entity to the ML feature extraction model, the ML feature extraction model hosted on a second computer device.

13. The method of any preceding claims, wherein a plurality of first features is recognized in the input data and, a plurality of second features of the subject entity extracted from the public dataset is received from the ML feature extractor.

14. A computer system comprising:
at least one memory configured to store computer-readable instructions; and
at least one processor coupled to the at least one memory, the computer-readable instruction configured, upon execution on the at least one processor, to implement the method of any preceding claim.

15. A computer-readable storage medium configured to store computer-readable instructions that are configured, upon execution on the at least one processor, to implement the method of any of claims 1 to 13.
